# EUROPÄISCHE PATENTSCHRIFT

(11) **EP 4 165 252 B1**
(45) Veröffentlichungstag und Bekanntmachung des Hinweises auf die Patenterteilung: **25.06.2025**
(21) Anmeldenummer: 21735576.7
(22) Anmeldetag: 14.06.2021
(51) Int. Cl.: B60L 3/10, H02P 3/10, B60L 15/20, E02F 9/20

(54) **VERFAHREN ZUM BETREIBEN EINES ELEKTRISCHEN ANTRIEBSSTRANGS EINER ARBEITSMASCHINE, ELEKTRISCHER ANTRIEBSSTRANG FÜR EINE ARBEITSMASCHINE UND ARBEITSMASCHINE**
METHOD FOR OPERATING AN ELECTRIC POWERTRAIN FOR A WORKING MACHINE, ELECTRIC POWERTRAIN FOR A WORKING MACHINE, AND WORKING MACHINE
PROCÉDÉ POUR FAIRE FONCTIONNER UNE CHAÎNE CINÉMATIQUE ÉLECTRIQUE D'UNE MACHINE DE TRAVAIL, CHAÎNE CINÉMATIQUE ÉLECTRIQUE POUR UNE MACHINE DE TRAVAIL ET MACHINE DE TRAVAIL

(30) Priorität: 16.06.2020 DE 102020207422
(43) Veröffentlichungstag der Anmeldung: 19.04.2023
(73) Patentinhaber: ZF Friedrichshafen AG, 88046 Friedrichshafen (DE)
(72) Erfinder: GLÖCKNER, Rico, 94060 Pocking (DE); ZOHNER, Raphael, 65597 Hünfelden (DE); BEBETI, Migen, 80805 München (DE); SCHINACHER, Stephan, 78592 Egesheim (DE); TRAUB, Stefan, 88048 Friedrichshafen (DE); ROTHMUND, Andreas, 88367 Hohentengen (DE); LEGNER, Jürgen, 88048 Friedrichshafen (DE)
(86) Internationale Anmeldenummer: PCT/EP2021/065983
(87) Internationale Veröffentlichungsnummer: WO 2021/254968

(56) Entgegenhaltungen:
- EP-A1- 2 937 467
- WO-A1-2020/007751
- US-A1- 2006 025 917
- US-A1- 2009 265 065
- US-A1- 2015 246 612
- US-A1- 2017 002 546

## Beschreibung

Die vorliegende Erfindung betrifft ein Verfahren zum Betreiben eines elektrischen Antriebsstrangs einer Arbeitsmaschine gemäß dem Oberbegriff von Anspruch 1, sowie eine entsprechende Arbeitsmaschine.

Im Stand der Technik sind elektrisch angetriebene Arbeitsmaschinen wie etwa Radlader, Kompaktlader, Teleskoplader, Dumper oder auch Bagger bekannt. Diese elektrisch angetriebenen Arbeitsmaschinen sind entweder rein elektrisch angetrieben, d.h. sie verfügen für ihre Energieversorgung ausschließlich über eine elektrische Batterie, oder aber sie sind diesel-elektrisch angetrieben, was bedeutet, dass die benötigte Energie von einem dieselgetriebenen Generator, üblicherweise in Verbindung mit einem elektrischen Pufferspeicher, wie z.B. einem entsprechend dimensionierten Kondensator, bereitgestellt wird. In allen Fällen wird die für den Fahrantrieb und den Arbeitsantrieb benötigte mechanische Leistung von einem oder mehreren Elektromotoren erbracht. Weiterhin sind auch hybrid-elektrische Arbeitsmaschinen bekannt, bei denen die zum Betrieb benötigte mechanische Leistung in erster Linie von einem Verbrennungsmotor, üblicherweise einem Dieselmotor, erbracht wird. Ein zusätzlich vorgesehener Elektromotor wird von einer Batterie gespeist und übernimmt hier typischerweise eine sog. Boost-Funktion.

In diesem Zusammenhang beschreibt die DE 20 2014 000 738 U1 einen rein elektromotorisch angetriebener Radlader, der einen ersten Elektromotor für einen Fahrantrieb und einen zweiten Elektromotor für einen Arbeitsantrieb aufweist.

Aus der EP 0 962 597 A2 ist eine batteriebetriebene Arbeitsmaschine bekannt, welche für den Fahrantrieb zwei Elektromotoren aufweist und einen weiteren Elektromotor für den Arbeitsantrieb aufweist.

Die WO 2020/007751 A1 offenbart ein Verfahren zum Betreiben eines Antriebssystems einer Arbeitsmaschine, wobei ein erster Elektromotor einem Fahrantrieb und ein zweiter Elektromotor einem Arbeitsantrieb des Antriebssystems zugeordnet ist. Dem Fahrantrieb und dem Arbeitsantrieb ist auch ein elektrischer Energiespeicher zum Betrieb des ersten und des zweiten Elektromotors zugeordnet. Zum Erzeugen einer Bremsleistung wird der erste Elektromotor in einem Generatorbetrieb betrieben, wobei auch elektrische Leistung erzeugt wird. Die elektrische Leistung wird dabei nach Maßgabe eines Zustands des Energiespeichers vollständig oder teilweise dem Energiespeicher bzw. dem zweiten Elektromotor zugeführt wird.

Aus der EP 2 937 467 A1 ist ein Anti-Schlupf-Verfahren für einen Elektro-Radlader bekannt. Dabei werden die Abwickellänge eines Stromversorgungskabels des Elektro-Radladers relativ zum Lader sowie eine Bewegung eines oder mehrerer Räder des Elektro-Radladers gemessen. Aus der Bewegung der Räder können Bewegungsdaten des Elektro-Radladers mit der Abwickellänge des Stromversorgungskabels verglichen werden, um das Vorliegen von Schlupf an den Rädern zu erkennen. In Folge kann das Antriebsmoment der Räder reduziert werden.

Die US 2017 002 546 A1 beschreibt ein Aushubsystem zur Verwendung mit einer mobilen Arbeitsmaschine mit einem Arbeitswerkzeug. Das Aushubsystem weist einen Sensor auf, der so konfiguriert ist, dass er ein Signal erzeugt, das einen Abstand zu einer geneigten Fläche eines Materialhaufens angibt, sowie eine Steuerung, die mit dem Sensor kommuniziert. Die Steuerung ist so konfiguriert, dass sie einen Schüttwinkel des Materialhaufens auf der Grundlage einer bekannten Kantenposition des Materialhaufens und des Abstands bestimmt.

Die US 2009 265 065 A1 zeigt ein Baufahrzeug, umfassend einen Motor, eine Hydraulikpumpe, die so konfiguriert ist, dass sie durch den Motor angetrieben wird, einen Fahrhydraulikmotor, der so konfiguriert ist, dass er durch von der Hydraulikpumpe abgegebenes Drucköl angetrieben wird, und ein Antriebsrad, das so konfiguriert ist, dass es durch die Antriebskraft des Fahrhydraulikmotors angetrieben wird. Eine Steuereinheit des Baufahrzeugs steuert anhand der Drehzahl des Motors, der Kapazität der Hydraulikpumpe und der Kapazität des Fahrhydraulikmotors eine Fahrzeuggeschwindigkeit und eine Traktionskraft. Darüber hinaus führt die Steuereinheit eine Schlupfregelung aus, um die maximale Drehzahl des Motors zu reduzieren, wenn sie kleiner oder gleich einer vorbestimmten Geschwindigkeit ist. Das Baufahrzeug verfügt auch über Beschleunigungssensorik.

Die bekannten elektrisch angetriebenen Arbeitsmaschinen sind jedoch dahingehend nachteilbehaftet, als dass sie aufgrund der zum Antrieb verwendeten Elektromotoren bauartbedingt beim Verzögern der Arbeitsmaschine, also beim Reduzieren der Drehzahl des Elektromotors, eine vergleichsweise große Trägheit im Antriebsstrang aufweisen, insbesondere wenn über einen Rekuperationsbetrieb des Elektromotors oder eine mechanische Reibungsbremse gebremst werden soll. Die Ursache für dieses Verhalten liegt in den vergleichsweise sehr hohen Drehzahlen eines Elektromotors in Verbindung mit seiner hohen Massenträgheit. Ein unter Volllast drehender Elektromotor weist daher eine deutlich größere Rotationsenergie auf als ein entsprechend leistungsstark ausgebildeter Verbrennungsmotor unter Volllast. Dies kann bei einem elektrisch angetriebenen Radlader beispielsweise dazu führen, dass bei einem Einstechen der Schaufel in einen Erdhaufen oder ähnliches aus mittlerer oder hoher Geschwindigkeit der Radlader über die Schaufel verzögert wird, ohne dass die Räder eine entsprechende Verzögerung auf den Elektromotor übertragen können. In der Folge drehen die Räder in dieser Situation durch, was zu einem unerwünschten Eingraben des Radladers führt.

Es ist eine Aufgabe der Erfindung, ein verbessertes Verfahren zum Betreiben eines elektrischen Antriebsstrangs einer Arbeitsmaschine vorzuschlagen.

Diese Aufgabe wird erfindungsgemäß durch das Verfahren zum Betreiben eines elektrischen Antriebsstrangs einer Arbeitsmaschine gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zum Betreiben eines elektrischen Antriebsstrangs einer Arbeitsmaschine, wobei der Antriebsstrang einen Arbeitsantrieb mit einem elektrischen Arbeitsmotor und einen Fahrantrieb mit einem elektrischen Fahrmotor und Fahrzeugrädern umfasst, wobei die Arbeitsmaschine von außen eine Geschwindigkeitsverzögerung erfährt und wobei eine durch die Geschwindigkeitsverzögerung auf die Fahrzeugräder wirkende Bremskraft geringer sein kann als eine durch ein Trägheitsmoment des Fahrmotors auf die Fahrzeugräder wirkende Antriebskraft. Das erfindungsgemäße Verfahren zeichnet sich dadurch aus, dass der Fahrmotor zur Drehzahlreduzierung mit einer seiner Betriebsrichtung entgegengesetzten Bestromung beaufschlagt wird, wenn mittels einer Situationserfassung vorausschauend erkannt wird, dass die durch die Geschwindigkeitsverzögerung auf die Fahrzeugräder wirkende Bremskraft geringer ist als die auf die Fahrzeugräder wirkende Antriebskraft.

Die Erfindung beschreibt also ein Verfahren, welches das Betreiben eines elektrischen Antriebsstrangs einer Arbeitsmaschine betrifft, wobei der Antriebsstrang zumindest aus zwei voneinander unabhängig betreibbaren Antrieben, nämlich dem Arbeitsantrieb und dem Fahrantrieb besteht. Es ist denkbar und bevorzugt, dass der Antriebsstrang auch weitere Elemente oder weitere Antriebe umfasst, beispielsweise Nebenabtriebe oder Hilfsantriebe. Insbesondere umfasst der Antriebsstrang auch einen elektrischen Energiespeicher, der vorzugsweise als wiederaufladbare elektrische Batterie ausgebildet ist. Sowohl der Arbeitsantrieb als auch der Fahrantrieb umfassen vorteilhaft jeweils einen oder mehrere Elektromotoren, die entsprechend ihrer Zuordnung als Fahrmotoren oder Arbeitsmotoren verwendet werden. Zusätzlich können sie Getriebe bzw. Übersetzungsstufen, Abtriebe, hydraulische Komponenten, Steuerelektronik und Leistungselektronik umfassen. Besonders vorteilhaft handelt es sich bei den Elektromotoren um jeweils baugleiche Elektromotoren für den Fahrantrieb und für den Arbeitsantrieb. Somit lassen sich hinsichtlich der Elektromotoren kostenreduzierende Stückzahleffekte bewirken. Der Fahrantrieb umfasst weiterhin Fahrzeugräder, die vom Fahrmotor angetrieben werden und mit dem Fahrmotor trieblich starr verbunden sind oder über eine Kupplung trieblich starr verbindbar sind. Ebenso umfasst der Arbeitsantrieb eine Arbeitsvorrichtung, beispielsweise eine Schaufel oder einen Hubmast, die vom Arbeitsmotor angetrieben werden.

In bestimmten Betriebssituationen kann der Fall auftreten, dass die Arbeitsmaschine von außen eine Geschwindigkeitsverzögerung erfährt. Darunter ist im Sinne der Erfindung eine Geschwindigkeitsverzögerung zu verstehen, die weder über die Fahrzeugbremsen noch über den Fahrantrieb initiiert wurde. Stattdessen entsteht die Geschwindigkeitsverzögerung aufgrund der Wechselwirkung der Arbeitsmaschine mit einer äußeren Gegebenheit. Beispielsweise kann es sich um eine steile Bergauffahrt handeln oder auch um ein Einstechen einer Arbeitsvorrichtung der Arbeitsmaschine in Erde oder Geröll. Beides führt dazu, dass die Arbeitsmaschine von außen ohne eigenes Zutun und insbesondere ohne Bremsanforderung eines Bedieners der Arbeitsmaschine eine Geschwindigkeitsverzögerung erfährt.

Insbesondere wenn die Arbeitsmaschine beim Erfahren der Geschwindigkeitsverzögerung zunächst eine vergleichsweise hohe Geschwindigkeit und der Fahrmotor somit eine vergleichsweise hohe Drehzahl aufweist, kann es passieren, dass die über die Fahrzeugräder auf den Fahrmotor wirkende Bremskraft geringer ist als die durch ein Trägheitsmoment des Fahrmotors auf die Fahrzeugräder wirkende Antriebskraft. Da der Fahrmotor als Elektromotor ausgebildet ist, weist er ein vergleichsweise großes Trägheitsmoment auf, welches bei der Geschwindigkeitsverzögerung einer Drehzahlreduzierung entgegenwirkt. Aufgrund dieses Trägheitsmoments und der Drehzahl des Elektromotors wirkt auf die Fahrzeugräder weiterhin also auch eine Antriebskraft, sogar dann, wenn der Fahrmotor nicht weiter bestromt wird. Die durch die Geschwindigkeitsverzögerung auf die Fahrzeugräder wirkende Bremskraft ist dabei maßgeblich geprägt durch die Kraftübertragungsfähigkeit der Fahrzeugräder auf den Untergrund, also durch die Haftkraft der Fahrzeugräder auf dem jeweiligen Untergrund. Wenn nun die Antriebskraft größer wird als die ebenfalls auf die Fahrzeugräder wirkende Bremskraft, verlieren die Fahrzeugräder ihre Bodenhaftung und drehen durch. In anderen Worten können die Fahrzeugräder ihre Drehgeschwindigkeit nicht im gleichen Maße reduzieren wir die Arbeitsmaschine ihre Geschwindigkeit reduziert. Dies kann zu einem unerwünschten Eingraben der Arbeitsmaschine in den Untergrund führen.

Zum Beispiel kann es vorkommen, dass eine als Radlader ausgebildete Arbeitsmaschine mit vergleichsweise hoher Geschwindigkeit eine als Schaufel ausgebildete Arbeitsvorrichtung in einen Erdhaufen einfährt und durch das Einfahren der Schaufel in den Erdhaufen eine Geschwindigkeitsverzögerung erfährt. Die vergleichsweise hohe Geschwindigkeit ist dabei erforderlich, um die Schaufel möglichst weit in den Erdhaufen einzufahren. Die Bodenhaftung der Fahrzeugräder ist unter Umständen jedoch nicht groß genug, um die Drehzahl des Fahrmotors im gleichen Maße zu reduzieren wie die Geschwindigkeit der Arbeitsmaschine reduziert wird. Somit ist die auf die Fahrzeugräder wirkende Antriebskraft größer als die auf die Fahrzeugräder wirkende Bremskraft und diese drehen durch, wodurch der Radlader eingegraben wird und ein Zurücksetzen des Radladers beim Herausfahren der Schaufel aus dem Erdhaufen erschwert wird.

Erfindungsgemäß ist es daher vorgesehen, dass eine Situationserfassung erfolgt, mittels der vorausschauend erkennbar ist, ob eine von außen wirkende Geschwindigkeitsverzögerung bevorsteht oder ggf. schon eingesetzte hat und ob die daraus resultierende, auf die Fahrzeugräder wirkende Bremskraft geringer sein wird als die auf die Fahrzeugräder wirkende Antriebskraft aufgrund des Trägheitsmoments des weiterdrehenden Fahrmotors. Die Situationserfassung kann z.B. anhand des Einsetzens einer Geschwindigkeitsverzögerung der Arbeitsmaschine ohne das Vorliegen einer entsprechenden Steuereingabe durch den Bediener der Arbeitsmaschine vorausschauend erkennen, dass eine derartige Situation vorliegt. Um nun vorteilhaft ein Durchdrehen der Fahrzeugräder und damit ein unerwünschtes Eingraben der Arbeitsmaschine zu vermeiden, wird der Fahrmotor erfindungsgemäß entgegen seiner aktuellen Betriebsrichtung bestromt, um ein zusätzliches, auf den Fahrmotor wirkendes Bremsmoment bereitzustellen.

Gemäß einer bevorzugten Ausführungsform der Erfindung ist es vorgesehen, dass die Situationserfassung mittels Umfeldsensorik erfolgt. Geeignete Umfeldsensoren können insbesondere Kamerasensoren, Radarsensoren bzw. Lidarsensoren sein. Beispielsweise ermöglicht die Umfeldsensorik, insbesondere in Verbindung mit einer entsprechenden Sensordatenauswertung, die Erkennung von Situationen, in denen die Arbeitsmaschine von außen eine Geschwindigkeitsverzögerung erfährt. Beispielsweise kann erkannt werden, dass ein Radlader sich einem Geröllhaufen nähert, um seine Schaufel in den Geröllhaufen einzufahren. Mit dem Erreichen des Geröllhaufens und damit mit Einsetzen der Geschwindigkeitsverzögerung kann die Drehzahl des Fahrmotors aktiv durch eine der Drehrichtung des Fahrmotors entgegengesetzten Bestromung reduziert werden.

Gemäß einer weiteren bevorzugten Ausführungsform der Erfindung ist es vorgesehen, dass die Situationserfassung mittels Beschleunigungssensorik und/oder Neigungssensorik erfolgt. Mittels der Beschleunigungssensorik kann beispielsweise erkannt werden, dass die Arbeitsmaschine ohne eine entsprechende Steuereingabe eines Bedieners der Arbeitsmaschine eine Geschwindigkeitsverzögerung erfährt und es sich somit um eine Geschwindigkeitsverzögerung von außen handeln muss. Die Neigungssensorik kann die Situationserfassung mittels der Beschleunigungssensorik unterstützen, indem z.B. eine steile Steigung als Ursache für die Geschwindigkeitsverzögerung von außen erfasst wird oder ein Aufsteigen der Arbeitsmaschine an der Hinterachse infolge eines Einfahrens einer Schaufel in einen Erdhaufen.

Erfindungsgemäß ist es vorgesehen, dass die Situationserfassung mittels einer rutschenden Kupplung erfolgt, wobei ein Kupplungsdruck derart vorgegeben wird, dass ein durch die Kupplung übertragbares Moment geringer ist als ein aus der Bremskraft resultierendes Bremsmoment. Das Bremsmoment an den Fahrzeugrädern ist dabei das durch eine Bodenhaftung der Fahrzeugräder ergebende maximal mögliche Bremsmoment. Somit kann bei einer rutschenden Kupplung erkannt werden, dass auf die von außen gebremsten Fahrzeugräder weiterhin eine Antriebskraft wirkt.

Der Kupplungsdruck wird dabei bevorzugt derart vorgegeben, dass ein normaler Fahrbetrieb der Arbeitsmaschine nicht beeinträchtigt wird. Besonders bevorzugt kann der Kupplungsdruck auch erst nach einem Anfahren der Arbeitsmaschine soweit abgesenkt werden, dass ein durch die Kupplung übertragbares Moment geringer ist als das maximale Bremsmoment an den Fahrzeugrädern, das sich bei einer von außen wirkenden Geschwindigkeitsverzögerung durch eine Bodenhaftung der Fahrzeugräder ergibt.

Gemäß einer weiteren bevorzugten Ausführungsform der Erfindung ist es vorgesehen, dass die Situationserfassung mittels einer Drehzahlüberwachung und/oder Drehmomentüberwachung des Fahrantriebs erfolgt. Beispielsweise kann bei einer Reduzierung der Drehzahl im Fahrantrieb und einer gleichzeitigen Zunahme des Drehmoments im Fahrantrieb, insbesondere bei Fehlen einer entsprechenden Steuereingabe des Bedieners, das Vorliegen einer von außen wirkenden Geschwindigkeitsverzögerung erkannt werden. Wenn das Drehmoment gleichzeitig einen vorgebbaren Schwellenwert übersteigt, kann der Fahrmotor aktiv entgegen seiner Drehrichtung bestromt werden, um ein Durchdrehen der Fahrzeugräder zu vermeiden.

Besonders bevorzugt erfolgt die Situationserfassung auch mittels einer Überwachung eines Drehzahlgradienten und/oder eines Drehmomentgradienten im Fahrantrieb.

Ebenso besonders bevorzugt erfolgt die Situationserfassung mittels einer Überwachung eines Schlupfs der Fahrzeugräder. Bei einer sprunghaften Zunahme des Schlupfs an allen Fahrzeugrädern, insbesondere in Kombination mit einer oder mehreren der zuvor genannten bevorzugten Ausführungsformen der Situationserkennung, kann beispielsweise ebenfalls erkannt werden, dass die durch die Geschwindigkeitsverzögerung auf die Fahrzeugräder wirkende Bremskraft geringer ist als die auf die Fahrzeugräder wirkende Antriebskraft. Der Schlupf der Fahrzeugräder wird bevorzugt mittels der ohnehin vorhandenen ABS-Sensoren ermittelt.

Gemäß einer weiteren bevorzugten Ausführungsform der Erfindung ist es vorgesehen, dass die Situationserfassung mittels einer absoluten Geschwindigkeitsüberwachung erfolgt. Bei der absoluten Geschwindigkeitsüberwachung handelt es sich um eine Überwachung der sog. "Speed over Ground". Wenn die festgestellte absolute Geschwindigkeit stärker abnimmt als eine über die Raddrehzahl ermittelte Geschwindigkeit der Arbeitsmaschine, so kann auch in diesem Fall erkannt werden, dass die durch die Geschwindigkeitsverzögerung auf die Fahrzeugräder wirkende Bremskraft geringer ist als die auf die Fahrzeugräder wirkende Antriebskraft.

Gemäß einer weiteren bevorzugten Ausführungsform der Erfindung ist es vorgesehen, dass die Situationserfassung mittels einer Überwachung einer Leistungsanforderung des Fahrantriebs erfolgt. Beispielsweise kann das Abrufen einer Maximalleistung des Fahrmotors durch den Bediener, also ein sog. "Kickdown", insbesondere in Verbindung mit einer kurz darauf folgenden Geschwindigkeitsverzögerung der Arbeitsmaschine darauf schließen lassen, dass der Bediener durch den Kickdown ausreichend Schwung holen wollte und ein hohes Drehmoment benötigt, um beispielsweise eine Schaufel eines Radladers möglichst tief in einen Erdhaufen einzufahren.

Die kurz darauf einsetzende Geschwindigkeitsverzögerung signalisiert das Erreichen des Erdhaufens und das Einfahren der Schaufel.

Gemäß einer weiteren bevorzugten Ausführungsform der Erfindung ist es vorgesehen, dass die Situationserfassung mittels einer Überwachung eines Verhaltens des Arbeitsantriebs erfolgt. Das Verhalten des Arbeitsantriebs kann dabei gleichermaßen eine Druckänderung in einer Arbeitshydraulik umfassen wie auch eine Ausrichtung bzw. Positionierung einer Schaufel an einem Schaufelarm, eine Stellung eines Hubmasten oder einfach eine Steuereingabe des Bedieners z.B. an einem dem Arbeitsantrieb zugeordneten Steuerelement, beispielsweise einem Joystick.

Erfindungsgemäß ist es zusätzlich oder alternativ vorgesehen, dass die Situationserfassung mittels einer Überwachung eines Fahrverhaltens eines Bedieners der Arbeitsmaschine erfolgt, wobei zuvor das Fahrverhalten des Bedieners der Arbeitsmaschine bei einem unmittelbaren Bevorstehen der Geschwindigkeitsverzögerung erlernt wird. Es wird also vorteilhaft durch Beobachtung eines Fahrverhaltens des Bedieners sowie durch Zuordnung, ob einem bestimmten Fahrverhaltens des Bedieners typischerweise eine Geschwindigkeitsverzögerung von außen folgt, erkannt, ob eine von außen wirkende Geschwindigkeitsverzögerung unmittelbar bevorsteht.

Das Fahrverhalten kann dabei beispielsweise Beschleunigungsverläufe, Geschwindigkeitsverläufe, Steuerungseingaben bzw. Lenkwinkel umfassen.

Besonders bevorzugt wird das Fahrverhalten nicht nur eines Bedieners erlernt, sondern es werden aufgrund ihres unterschiedlichen Fahrverhaltens mehrere unterschiedliche Bediener der Arbeitsmaschine unterschieden und für jeden eine Situationserfassung mittels der Überwachung des Fahrverhaltens ausgeführt. Unterschiedliche Bediener können dabei beispielsweise auch anhand ihres Gewichts unterschieden werden, wenn sie auf einem Fahrersitz der Arbeitsmaschine Platz nehmen. Hierfür kann eine Gewichtserfassungsvorrichtung in den Fahrersitz integriert sein.

Bevorzugt ist es vorgesehen, dass die Situationserfassung zusätzlich mittels einer Überwachung einer jeweils eingelegten Gangstufe eines Fahrgetriebes, eines Zustands einer Differenzialsperre, einer Temperatur des Fahrmotors bzw. des Arbeitsmotors sowie mittels GPS-Positionsinformationen erfolgt. Die Gangstufe kann dabei beispielsweise als Teil des Fahrverhaltens erfasst werden, ebenso die Differenzialsperre und die Temperaturen des Fahrmotors bzw. des Arbeitsmotors. Die GPS-Positionsinformation kann beispielsweise genutzt werden, um die Annäherung der Arbeitsmaschine an einen Erdhaufen zu erkennen, dessen GPS-Position bekannt ist.

Gemäß einer weiteren bevorzugten Ausführungsform der Erfindung ist es vorgesehen, dass die Drehzahlreduzierung des Fahrmotors unterstützt wird, indem eine Gangrückschaltung erfolgt. Durch eine Gangrückschaltung wird das Drehzahlverhältnis zwischen dem Fahrmotor und den Fahrzeugrädern dahingehend geändert, dass einer identischen Drehzahl der Fahrzeugräder nun eine höhere Drehzahl des Fahrmotors entspricht, bzw. einer identischen Drehzahl des Fahrmotors eine reduzierte Drehzahl der Fahrzeugräder entspricht. Somit kann ein unerwünschtes Eingraben der Arbeitsmaschine zumindest durch die reduzierte Drehzahl der Fahrzeugräder verlangsamt werden, bis die Drehzahl des Fahrmotors durch die Bestromung entgegen seiner gegenwärtigen Drehrichtung soweit reduziert werden kann, dass die Fahrzeugräder nicht länger durchdrehen.

Die Erfindung betrifft weiterhin einen elektrischen Antriebsstrang für eine Arbeitsmaschine, wobei der Antriebsstrang einen Arbeitsantrieb mit einem elektrischen Arbeitsmotor und einen Fahrantrieb mit einem elektrischen Fahrmotor und Fahrzeugrädern umfasst, wobei die Fahrzeugräder trieblich starr mit dem Fahrmotor gekoppelt sind oder koppelbar sind, so dass bei einer von außen auf die Arbeitsmaschine wirkenden Geschwindigkeitsverzögerung eine durch die Geschwindigkeitsverzögerung auf die Fahrzeugräder wirkende Bremskraft besteht. Der erfindungsgemäße Antriebsstrang zeichnet sich dadurch aus, dass der Antriebsstrang dazu ausgebildet ist, mittels einer Situationserfassung vorausschauend zu erkennen, ob die durch die Geschwindigkeitsverzögerung auf die Fahrzeugräder wirkende Bremskraft geringer ist als eine durch ein Trägheitsmoment des Fahrmotors auf die Fahrzeugräder wirkende Antriebskraft, wobei der Fahrantrieb dazu ausgebildet ist, den Fahrmotor zur Drehzahlreduzierung mit einer seiner Betriebsrichtung entgegengesetzten Bestromung zu beaufschlagen, wenn erkannt wird, dass die Bremskraft geringer ist als die Antriebskraft.

Der erfindungsgemäße Antriebsstrang ermöglicht somit die Ausführung des erfindungsgemäßen Verfahrens, was zu den bereits im Zusammenhang mit dem erfindungsgemäßen Verfahren beschriebenen Vorteilen führt.

Bevorzugt ist es vorgesehen, dass der Antriebsstrang weiterhin einen Inverter zur Ansteuerung des Fahrmotors umfasst. Der Inverter ist vorteilhaft dazu ausgebildet, neben der eigentlichen Ansteuerung des Fahrmotors auch das erfindungsgemäße Verfahren in Form eines elektronisch ausführbaren Software-Algorithmus auszuführen. Daraus ergibt sich der Vorteil einer vergleichsweise sehr hohen Regelgeschwindigkeit, da der Inverter unmittelbar den Fahrmotor ansteuert.

Die Erfindung betrifft weiterhin eine Arbeitsmaschine, umfassend einen erfindungsgemäßen Antriebsstrang. Daraus ergeben sich die bereits im Zusammenhang mit dem erfindungsgemäßen Antriebsstrang beschriebenen Vorteile auch für die erfindungsgemäße Arbeitsmaschine.

Gemäß einer bevorzugten Ausführungsform der Erfindung ist es vorgesehen, dass die Arbeitsmaschine als Radlader ausgebildet ist.

Nachfolgend wird die Erfindung anhand von in den Figuren dargestellten Ausführungsformen beispielhaft erläutert.

Es zeigen:
- Fig. 1: beispielhaft eine mögliche Ausführungsform eines erfindungsgemäßen Verfahrens zum Betreiben eines elektrischen Antriebsstrangs einer Arbeitsmaschine in Form eines Funktionsschemas und
- Fig. 2: beispielhaft und schematisch eine mögliche Ausbildungsform einer erfindungsgemäßen Arbeitsmaschine.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

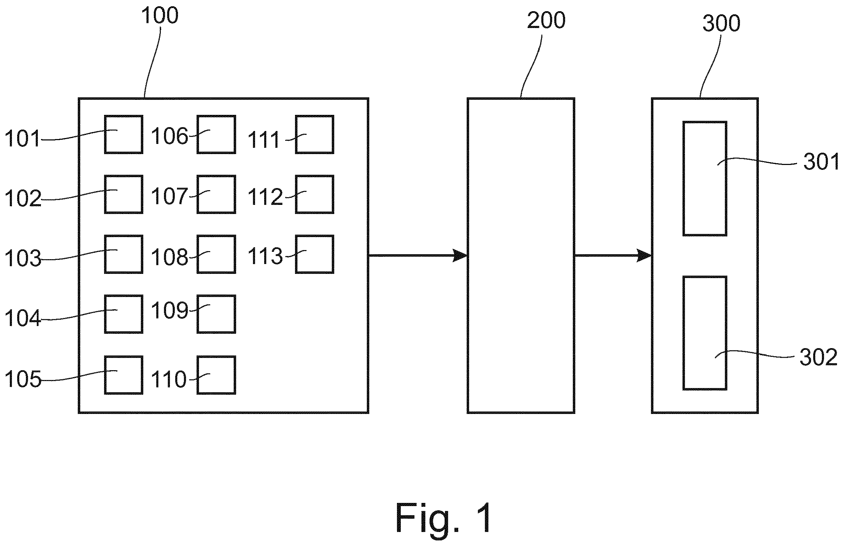

Fig. 1 zeigt beispielhaft eine mögliche Ausführungsform eines erfindungsgemäßen Verfahrens zum Betreiben eines elektrischen Antriebsstrangs 11 einer Arbeitsmaschine 10 in Form eines Funktionsschemas. Der Antriebsstrang 11 umfasst einen Arbeitsantrieb 20 mit einem elektrischen Arbeitsmotor 21 und einen Fahrantrieb 30 mit einem elektrischen Fahrmotor 31 und Fahrzeugrädern 32. Wenn die Arbeitsmaschine 10 von außen eine Geschwindigkeitsverzögerung erfährt, kann es passieren, dass eine durch die Geschwindigkeitsverzögerung auf die Fahrzeugräder 32 wirkende Bremskraft geringer ist als eine durch ein Trägheitsmoment des Fahrmotors 31 auf die Fahrzeugräder 32 wirkende Antriebskraft. Dadurch kann es in einer derartigen Situation passieren, dass die Fahrzeugräder 32 eine Drehzahl aufweisen, welche einer größeren als der tatsächlichen Geschwindigkeit der Arbeitsmaschine 10 entspricht. Die Fahrzeugräder 32 drehen also durch, was zu einem unerwünschten Eingraben der Arbeitsmaschine 10 führt. Um dies zu vermeiden, wird zunächst eine erfindungsgemäße Situationserfassung durchgeführt, was durch Funktionsblock 100 veranschaulicht wird. Funktionsblock 100 umfasst dabei eine Reihe von Unterblöcken 101-113, welche jeweils eine konkrete Art der Situationserfassung beschrieben. In Block 101 erfolgt die Situationserfassung mittels einer Drehzahlüberwachung einer angetriebenen Achse der Arbeitsmaschine 10. Block 102 steht für die Situationserfassung mittels einer Überwachung eines Reifenschlupfs der angetriebenen Fahrzeugräder 32. Block 103 beschreibt die Situationserfassung mittels einer Überwachung eines eingeschlagenen Lenkwinkels und Block 104 mittels einer Überwachung eines hydraulischen Drucks im Arbeitsantrieb 20. Block 105 steht für die Situationserfassung mittels Umfeldsensorik 12, beispielsgemäß mittels eines Kamerasensors, und Block 106 steht für die Situationserfassung mittels Beschleunigungssensorik. Block 107 steht für die Situationserfassung mittels einer Überwachung einer Abtriebsdrehzahl eines Fahrgetriebes 33 des Fahrantriebs 30 und Block 108 für die Situationserfassung mittels einer Überwachung einer eingelegten Gangstufe des Fahrgetriebes33.

Block 109 wiederum beschreibt die Situationserfassung mittels einer Überwachung einer Differentialsperre einer angetriebenen Achse. Die Blöcke 110, 111 und 112 beschreiben die Situationserfassung mittels einer Überwachung der Betätigung eines Eingabemittels für den Arbeitsantrieb 20, einer Position einer Schaufel des Arbeitsantriebs 20 und eines Verstellwinkels einer hydraulischen Pumpe des Arbeitsantriebs 20. In Block 113 schließlich erfolgt die die Situationserfassung mittels einer Überwachung des Fahrmotors 31 und des Arbeitsmotors 21, insbesondere von der Temperaturen, Drehzahlen, Drehmomenten, Drehzahlgradienten und Drehmomentgradienten. In Funktionsblock 200 werden die in Funktionsblock 100 erfassten Situationserfassungen automatisiert dahingehend ausgewertet, dass vorausschauend erkennbar wird, ob eine Situation unmittelbar bevorsteht, in der die durch die Geschwindigkeitsverzögerung auf die Fahrzeugräder 32 wirkende Bremskraft geringer ist als die auf die Fahrzeugräder 32 wirkende Antriebskraft und es somit zu einem Durchdrehen der Fahrzeugräder 32 aufgrund der Geschwindigkeitsverzögerung von außen kommt. Sofern dies vorausschauend erkannt wird, wird in Funktionsblock 300 die Drehzahl des Fahrmotors 31 aktiv reduziert. Dazu wird in Unterblock 301der Fahrmotor 31 zur Drehzahlreduzierung mit einer seiner Betriebsrichtung entgegengesetzten Bestromung beaufschlagt. Zusätzlich erfolgt in Block 302 eine Gangrückschaltung zur Unterstützung der schnellen Drehzahlreduzierung des Fahrmotors 31.

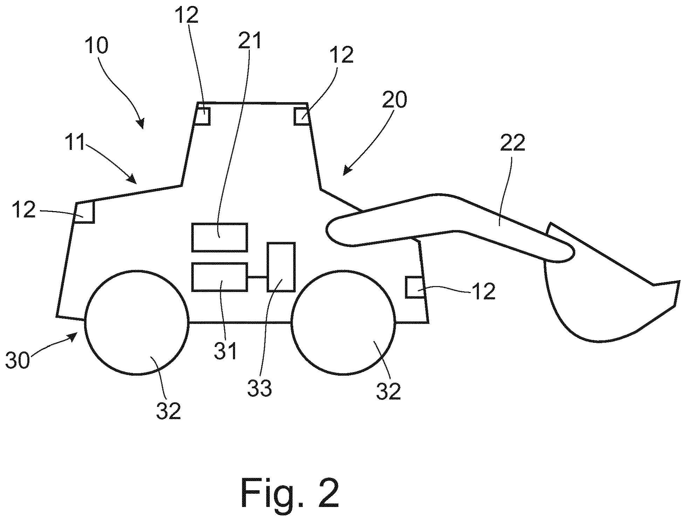

Fig. 2 zeigt beispielhaft und schematisch eine mögliche Ausbildungsform einer erfindungsgemäßen Arbeitsmaschine 10. Die Arbeitsmaschine 10 ist beispielsgemäß als Radlader 10 ausgebildet und umfasst einen elektrischer Antriebsstrang 11. Der elektrischer Antriebsstrang 11 wiederum umfasst seinerseits einen Arbeitsantrieb 20 mit einem elektrischen Arbeitsmotor 21 und einer Arbeitsvorrichtung 22 sowie einen Fahrantrieb 30 mit einem elektrischen Fahrmotor 31 und angetriebenen Fahrzeugrädern 32. Die Fahrzeugräder 32 sind mit dem Fahrmotor 31 über ein Fahrgetriebe 33 trieblich starr koppelbar, so dass bei einer von außen auf den Radlader 10 wirkenden Geschwindigkeitsverzögerung eine durch die Geschwindigkeitsverzögerung auf den Fahrmotor 31 wirkende Bremskraft besteht. Dieser Bremskraft wirkt jedoch eine durch ein Trägheitsmoment des Fahrmotors 31 erzeugte und auf die Fahrzeugräder wirkende Antriebskraft entgegen. Wenn diese Antriebskraft größer wird als die Bremskraft, drehen die Fahrzeugräder 32 durch und graben den Radlader 10 ein.

Der Antriebsstrang 11 ist deshalb dazu ausgebildet, das erfindungsgemäße Verfahren auszuführen. Mittels hierfür geeigneter Umfeldsensorik 12 erfolgt eine Situationserfassung, um vorausschauend zu erkennen, ob die durch die Geschwindigkeitsverzögerung auf den Fahrmotor 31 wirkende Bremskraft geringer ist als eine durch ein Trägheitsmoment des Fahrmotors 31 auf die Fahrzeugräder 32 wirkende Antriebskraft. Sofern dies der Fall ist, wird der Fahrmotor 31 zur Drehzahlreduzierung mit einer seiner Betriebsrichtung entgegengesetzten Bestromung beaufschlagt.

### Bezugszeichen

- 10: Arbeitsvorrichtung
- 11: elektrischer Antriebsstrang
- 12: Umfeldsensorik
- 20: Arbeitsantrieb
- 21: Arbeitsmotor
- 22: Arbeitsvorrichtung
- 30: Fahrantrieb
- 31: Fahrmotor
- 32: Fahrzeugrad
- 33: Fahrgetriebe
- 100: Situationserfassung
- 101: Situationserfassung mittels einer Drehzahlüberwachung einer angetriebenen Achse
- 102: Situationserfassung mittels einer Überwachung eines Reifenschlupfs der angetriebenen Fahrzeugräder
- 103: Situationserfassung mittels einer Überwachung eines eingeschlagenen Lenkwinkels
- 104: Situationserfassung mittels einer Überwachung eines hydraulischen Drucks im Arbeitsantrieb
- 105: Situationserfassung mittels Umfeldsensorik
- 106: Situationserfassung mittels Beschleunigungssensorik
- 107: Situationserfassung mittels einer Überwachung einer Abtriebsdrehzahl eines Fahrgetriebes
- 108: Situationserfassung mittels einer Überwachung einer eingelegten Gangstufe des Fahrgetriebes
- 109: Situationserfassung mittels einer Überwachung einer Differentialsperre
- 110: Situationserfassung mittels einer Überwachung der Betätigung eines Eingabemittels für den Arbeitsantrieb
- 111: Situationserfassung mittels einer Position einer Schaufel des Arbeitsantriebs
- 112: Situationserfassung mittels eines Verstellwinkels einer hydraulischen Pumpe des Arbeitsantriebs
- 113: Situationserfassung mittels einer Überwachung des Fahrmotors und des Arbeitsmotors
- 200: Situationserfassung
- 300: Reduzierung der Drehzahl des Fahrmotors
- 301: Bestromung des Fahrmotor zur Drehzahlreduzierung
- 302: Gangrückschaltung zur Unterstützung der Drehzahlreduzierung des Fahrmotors

## Patentansprüche

1. Verfahren zum Betreiben eines elektrischen Antriebsstrangs (11) einer Arbeitsmaschine (10), wobei der Antriebsstrang (11) einen Arbeitsantrieb (20) mit einem elektrischen Arbeitsmotor (21) und einen Fahrantrieb (30) mit einem elektrischen Fahrmotor (31) und Fahrzeugrädern (32) umfasst, wobei die Arbeitsmaschine (10) von außen eine Geschwindigkeitsverzögerung erfährt und wobei eine durch die Geschwindigkeitsverzögerung auf die Fahrzeugräder (32) wirkende Bremskraft geringer sein kann als eine durch ein Trägheitsmoment des Fahrmotors (31) auf die Fahrzeugräder (32) wirkende Antriebskraft,
**dadurch gekennzeichnet, dass** der Fahrmotor (31) zur Drehzahlreduzierung mit einer seiner Betriebsrichtung entgegengesetzten Bestromung beaufschlagt wird (300, 301), wenn mittels einer Situationserfassung vorausschauend erkannt wird, dass die durch die Geschwindigkeitsverzögerung auf die Fahrzeugräder (32) wirkende Bremskraft geringer ist als die auf die Fahrzeugräder (32) wirkende Antriebskraft (200) und dass die Situationserfassung mittels einer rutschenden Kupplung erfolgt, wobei ein Kupplungsdruck derart vorgegeben wird, dass ein durch die Kupplung übertragbares Moment geringer ist als ein aus der Bremskraft resultierendes Bremsmoment und/oder.
dass die Situationserfassung mittels einer Überwachung eines Fahrverhaltens eines Bedieners der Arbeitsmaschine (10) erfolgt, wobei zuvor das Fahrverhalten des Bedieners der Arbeitsmaschine (10) bei einem unmittelbaren Bevorstehen der Geschwindigkeitsverzögerung erlernt wird.

2. Verfahren nach Anspruch 1,
**dadurch gekennzeichnet, dass** die Situationserfassung mittels Umfeldsensorik (12) erfolgt (105).

3. Verfahren nach mindestens einem der Ansprüche 1 und 2,
**dadurch gekennzeichnet, dass** die Situationserfassung mittels Beschleunigungssensorik und/oder Neigungssensorik erfolgt.

4. Verfahren nach mindestens einem der Ansprüche 1 bis 3,
**dadurch gekennzeichnet, dass** die Situationserfassung mittels einer Drehzahlüberwachung und/oder Drehmomentüberwachung des Fahrantriebs (30) erfolgt (113).

5. Verfahren nach mindestens einem der Ansprüche 1 bis 4,
**dadurch gekennzeichnet, dass** die Situationserfassung mittels einer absoluten Geschwindigkeitsüberwachung erfolgt.

6. Verfahren nach mindestens einem der Ansprüche 1 bis 5,
**dadurch gekennzeichnet, dass** die Situationserfassung mittels einer Überwachung einer Leistungsanforderung des Fahrantriebs (30) erfolgt (113).

7. Verfahren nach mindestens einem der Ansprüche 1 bis 6,
**dadurch gekennzeichnet, dass** die Situationserfassung mittels einer Überwachung eines Verhaltens des Arbeitsantriebs (20) erfolgt (104,110, 111, 112).

8. Verfahren nach mindestens einem der Ansprüche 1 bis 7,
**dadurch gekennzeichnet, dass** die Drehzahlreduzierung des Fahrmotors (31) unterstütz wird, indem eine Gangrückschaltung erfolgt (300, 302).

9. Arbeitsmaschine (10) umfassend einen elektrischen Antriebsstrang (11), der dazu ausgebildet ist, ein Verfahren nach mindestens einem der Ansprüche 1 bis 8 auszuführen, wobei der Antriebsstrang (11) einen Arbeitsantrieb (20) mit einem elektrischen Arbeitsmotor (21) und einen Fahrantrieb (30) mit einem elektrischen Fahrmotor (31) und Fahrzeugrädern (32) umfasst, wobei die Fahrzeugräder (32) trieblich starr mit dem Fahrmotor (31) gekoppelt sind oder koppelbar sind, so dass bei einer von außen auf die Arbeitsmaschine (10) wirkenden Geschwindigkeitsverzögerung eine durch die Geschwindigkeitsverzögerung auf die Fahrzeugräder (32) wirkende Bremskraft besteht,
**dadurch gekennzeichnet, dass** der Antriebsstrang (11) dazu ausgebildet ist, mittels einer Situationserfassung vorausschauend zu erkennen, ob die durch die Geschwindigkeitsverzögerung auf die Fahrzeugräder (32) wirkende Bremskraft geringer ist als eine durch ein Trägheitsmoment des Fahrmotors (31) auf die Fahrzeugräder (32) wirkende Antriebskraft, wobei der Fahrantrieb (30) dazu ausgebildet ist, den Fahrmotor (30) zur Drehzahlreduzierung mit einer seiner Betriebsrichtung entgegengesetzten Bestromung zu beaufschlagen, wenn erkannt wird, dass die Bremskraft geringer ist als die Antriebskraft.

10. Arbeitsmaschine (10) nach Anspruch 9, **dadurch gekennzeichnet, dass** die Arbeitsmaschine (10) als Radlader (10) ausgebildet ist.

## Claims

1. Method for operating an electric drive train (11) of a work machine (10), wherein the drive train (11) comprises a work drive (20) with an electric working motor (21) and a traction drive (30) with an electric traction motor (31) and vehicle wheels (32), wherein the work machine (10) experiences deceleration from the outside and wherein a braking force acting on the vehicle wheels (32) owing to the deceleration can be lower than a drive force acting on the vehicle wheels (32) owing to a moment of inertia of the traction motor (31),
**characterized in that** the traction motor (31) is energized (300, 301) opposite to its operating direction to reduce rotation speed if a situation detection process predictively identifies that the braking force acting on the vehicle wheels (32) owing to the deceleration is lower than the drive force (200) acting on the vehicle wheels (32) and that the situation is detected by means of a slipping clutch, wherein a clutch pressure is specified in such a way that a torque transmittable by the clutch is lower than a braking torque resulting from the braking force and/or
**in that** the situation is detected by means of monitoring driving behaviour of an operator of the work machine (10), wherein the driving behaviour of the operator of the work machine (10) is learnt beforehand when deceleration is imminent.

2. Method according to Claim 1,
**characterized in that** the situation is detected (105) by means of an environment sensor system (12).

3. Method according to at least one of Claims 1 and 2, **characterized in that** the situation is detected by means of an acceleration sensor system and/or an inclination sensor system.

4. Method according to at least one of Claims 1 to 3, **characterized in that** the situation is detected (113) by means of rotation speed monitoring and/or torque monitoring of the traction drive (30).

5. Method according to at least one of Claims 1 to 4, **characterized in that** the situation is detected by means of absolute speed monitoring.

6. Method according to at least one of Claims 1 to 5, **characterized in that** the situation is detected (113) by means of monitoring a power requirement of the traction drive (30).

7. Method according to at least one of Claims 1 to 6, **characterized in that** the situation is detected (104, 110, 111, 112) by means of monitoring behaviour of the work drive (20).

8. Method according to at least one of Claims 1 to 7, **characterized in that** the reduction in rotation speed of the traction motor (31) is assisted by way of a gear downshift (300, 302) being performed.

9. Work machine (10) comprising an electric drive train (11) which is designed to carry out a method according to at least one of Claims 1 to 8, wherein the drive train (11) comprises a work drive (20) with an electric working motor (21) and a traction drive (30) with an electric traction motor (31) and vehicle wheels (32), wherein the vehicle wheels (32) are operationally rigidly coupled or couplable to the traction motor (31), so that, in the event of deceleration acting on the work machine (10) from the outside, a braking force acting on the vehicle wheels (32) owing to the deceleration is present,
**characterized in that** the drive train (11) is designed to predictively identify by means of situation detection whether the braking force acting on the vehicle wheels (32) owing to the deceleration is lower than a drive force acting on the vehicle wheels (32) owing to a moment of inertia of the traction motor (31), wherein the traction drive (30) is designed to energize the traction motor (30) opposite to its operating direction to reduce rotation speed if it is identified that the braking force is lower than the drive force.

10. Work machine (10) according to Claim 9,
**characterized in that** the work machine (10) is designed as a wheeled loader (10).

## Revendications

1. Procédé pour faire fonctionner une chaîne cinématique électrique (11) d'une machine de travail (10), la chaîne cinématique (11) comprenant un système d'entraînement (20) de travail avec un moteur électrique de travail (21) et un système d'entraînement (30) de déplacement avec un moteur électrique de déplacement (31) et des roues (32) de véhicule, la machine de travail (10) subissant une décélération provenant de l'extérieur et une force de freinage agissant sur les roues (32) de véhicule en raison de la décélération peut être inférieure à la force motrice agissant sur les roues (32) de véhicule en raison d'un moment d'inertie du moteur de déplacement (31),
**caractérisé en ce que** le moteur de déplacement (31) est alimenté en courant (300, 301) dans le sens opposé à son sens de fonctionnement afin de réduire sa vitesse de rotation lorsqu'un système de détection de situation détecte de manière anticipée que la force de freinage agissant sur les roues (32) de véhicule en raison de la décélération est inférieure à la force motrice (200) agissant sur les roues (32) de véhicule, et **en ce que** la détection de situation s'effectue au moyen d'un embrayage à glissement, une pression d'embrayage étant prédéfinie de telle sorte qu'un couple transmissible par l'embrayage soit inférieur à un couple de freinage résultant de la force de freinage et/ou.
**en ce que** la détection de situation s'effectue au moyen d'une surveillance du comportement de conduite d'un opérateur de la machine de travail (10), le comportement de conduite de l'opérateur de la machine de travail (10) étant préalablement appris en cas de ralentissement imminent.

2. Procédé selon la revendication 1,
**caractérisé en ce que** la détection de situation s'effectue (105) au moyen de capteurs d'environnement (12).

3. Procédé selon au moins une des revendications 1 et 2,
**caractérisé en ce que** la détection de situation s'effectue au moyen de capteurs d'accélération et/ou de capteurs d'inclinaison.

4. Procédé selon au moins une des revendications 1 à 3,
**caractérisé en ce que** la détection de situation s'effectue (113) au moyen d'une surveillance de la vitesse de rotation et/ou d'une surveillance du couple du système d'entraînement (30).

5. Procédé selon au moins une des revendications 1 à 4,
**caractérisé en ce que** la détection de situation s'effectue au moyen d'une surveillance de la vitesse absolue.

6. Procédé selon au moins une des revendications 1 à 5,
**caractérisé en ce que** la détection de situation s'effectue (113) au moyen d'une surveillance d'une demande de puissance par le système d'entraînement (30) de déplacement.

7. Procédé selon au moins une des revendications 1 à 6,
**caractérisé en ce que** la détection de situation s'effectue (104, 110, 111, 112) au moyen d'une surveillance d'un comportement du système d'entraînement (20) de travail.

8. Procédé selon au moins une des revendications 1 à 7,
**caractérisé en ce que** la réduction de la vitesse de rotation du moteur de déplacement (31) est assistée par le fait (300, 302) d'effectuer une rétrogradation.

9. Machine de travail (10) comprenant une chaîne cinématique électrique (11) qui est conçue pour mettre en œuvre un procédé selon au moins une des revendications 1 à 8, la chaîne cinématique (11) comprenant un système d'entraînement (20) de travail avec un moteur de travail électrique (21) et un système d'entraînement (30) de déplacement avec un moteur de déplacement électrique (31) et des roues (32) de véhicule, les roues (32) de véhicule étant reliées ou aptes à être reliées de manière rigide au moteur de déplacement (31) de telle sorte que, lors d'un ralentissement agissant de l'extérieur sur la machine de travail (10), une force de freinage agisse sur les roues (32) du véhicule en conséquence du ralentissement,
**caractérisé en ce que** la chaîne cinématique (11) est conçue pour détecter de manière anticipée, au moyen d'une détection de situation, si la force de freinage agissant sur les roues (32) de véhicule en raison de la décélération est inférieure à une force motrice agissant sur les roues (32) de véhicule en raison d'un moment d'inertie du moteur de traction (31), l'entraînement (30) étant conçu pour alimenter le moteur (30) de déplacement dans le sens opposé à son sens de fonctionnement afin de réduire sa vitesse de rotation lorsqu'il est détecté que la force de freinage est inférieure à la force motrice.

10. Machine de travail (10) selon la revendication 9, **caractérisée en ce que** la machine de travail (10) est réalisée sous la forme d'une chargeuse sur pneus (10).
